(19) Europäisches Patentamt / European Patent Office / Office européen des brevets

(11) **EP 4 362 047 B1**

(12) **FASCICULE DE BREVET EUROPEEN**

(45) Date de publication et mention de la délivrance du brevet:
**08.10.2025 Bulletin 2025/41**

(21) Numéro de dépôt: **23206913.8**

(22) Date de dépôt: **31.10.2023**

(51) Classification Internationale des Brevets (IPC):
**G21D 3/00** (2006.01)

(52) Classification Coopérative des Brevets (CPC):
**G21D 3/001;** G21C 17/10

(54) **PROCÉDÉ D'ESTIMATION D'UNE VALEUR FUTURE DU DÉSÉQUILIBRE AXIAL DE PUISSANCE DANS UN RÉACTEUR NUCLÉAIRE**

VERFAHREN ZUR SCHÄTZUNG EINES ZUKÜNFTIGEN WERTES DES AXIALEN LEISTUNGSUNGLEICHGEWICHTS IN EINEM KERNREAKTOR

METHOD FOR ESTIMATING A FUTURE VALUE OF THE AXIAL POWER IMBALANCE IN A NUCLEAR REACTOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **31.10.2022 FR 2211365**

(43) Date de publication de la demande:
**01.05.2024 Bulletin 2024/18**

(73) Titulaires:
• **Electricité de France**
**75008 Paris (FR)**
• **Centre National de la Recherche Scientifique (CNRS)**
**75016 Paris (FR)**
• **ECOLE CENTRALE DE NANTES**
**44000 Nantes (FR)**

(72) Inventeurs:
• **TRAORE, Madina**
**92360 Meudon-la-Forêt (FR)**
• **SIMONINI, Giorgio**
**78000 Versailles (FR)**
• **GOUDE, Yannig**
**78960 Voisins-le-Bretonneux (FR)**
• **LAGRANGE, Mathieu**
**44700 Orvault (FR)**
• **GIRARD, Alexandre**
**92500 Rueil-Malmaison (FR)**
• **IDIER, Jérôme**
**44300 Nantes (FR)**

(74) Mandataire: **Regimbeau**
**20, rue de Chazelles**
**75847 Paris Cedex 17 (FR)**

(56) Documents cités:
**WO-A1-94/12984** CN-A- 113 392 530

**Description**

**DOMAINE DE L'INVENTION**

L'invention concerne l'estimation d'une valeur future du déséquilibre axial de puissance dans un réacteur nucléaire.

**ETAT DE LA TECHNIQUE**

Les centrales nucléaires, en tant que moyens de production «pilotables», représentent l'un des contributeurs principaux à l'équilibre du réseau électrique en France. L'électricité ne pouvant pas (ou peu) être stockée, l'égalité entre la puissance électrique produite par les différents moyens de production et la puissance électrique consommée par les usagers doit être vérifiée à chaque instant. Or, les consommateurs et une partie des moyens de production, en particulier les moyens de production d'électricité dits renouvelables telles que l'éolien et le photovoltaïque, sont non pilotables et intermittents : un moyen de production pilotable, tel que le nucléaire, est donc nécessaire pour compenser les fluctuations de la consommation et de la production non pilotable pour assurer l'équilibre offre/demande Pour cela, les réacteurs nucléaires des centrales nucléaires doivent être techniquement en mesure de faire varier rapidement la puissance électrique produite en fonction du besoin, tout en restant dans les domaines de fonctionnement et de sûreté qui leurs sont assignés. Les domaines de fonctionnement sont déterminés notamment en fonction du déséquilibre axial de puissance et des oscillations Xénon présentées maintenant.

*Déséquilibre axial de puissance dans un réacteur*

Au sein d'un réacteur l'énergie thermique destinée à être transformée en énergie électrique est produite par fission. La fission nucléaire est un phénomène par lequel un noyau atomique lourd tel que l'Uranium ou le Plutonium se scinde en deux (fission binaire) ou trois (fission ternaire) nucléides plus légers soit de manière spontanée soit après avoir absorbé un neutron. On parle de neutronique pour désigner l'étude du déplacement des neutrons dans la matière et des réactions qu'ils y induisent, en particulier la génération de puissance par fission. La neutronique est à la base de la conception des cœurs de réacteurs nucléaires à fission contrôlée, tels que les réacteurs à eau pressurisée.

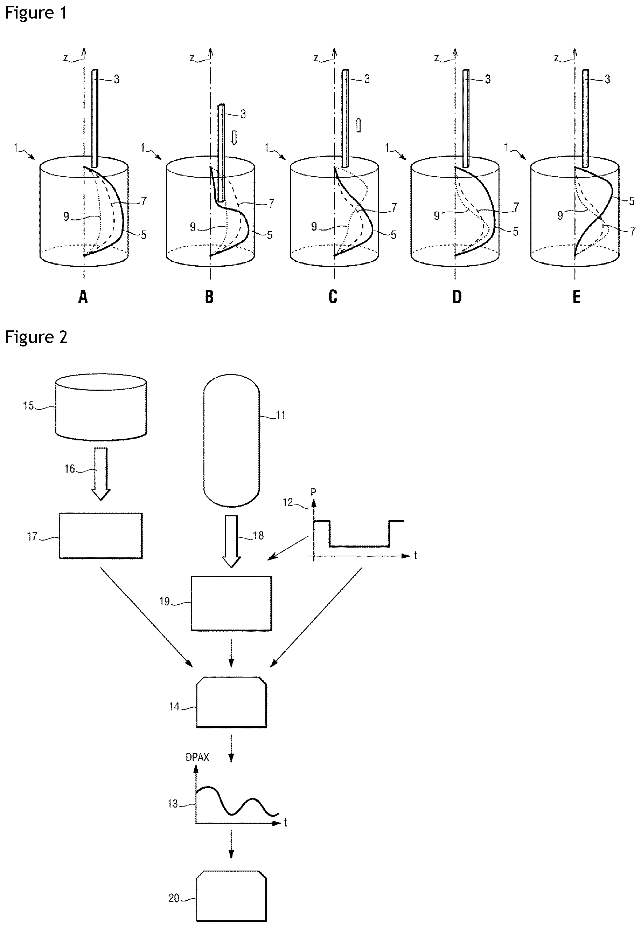

En rapport avec la figure 1 illustrant un réacteur 1, on peut définir la direction axiale z comme la direction verticale donnée par un fil à plomb. Cette direction z est orientée verticalement vers le haut dans la figure 1. On s'intéresse à caractériser un écart entre une puissance $P_h$ dans la moitié haute du cœur du réacteur et une puissance $P_b$ dans la moitié basse du cœur du réacteur. La courbe 5 représente la puissance en fonction de la hauteur z dans le réacteur.

Cet écart varie sous l'effet des barres de contrôle ou grappes, de la présence de poisons neutroniques tels que des produits de fission comme le xénon ou le samarium, de la température du combustible ou encore de son taux d'épuisement qui croît avec le temps au cours de la campagne de fonctionnement du réacteur.

L'écart de puissance entre le haut et le bas du réacteur peut être caractérisé par deux grandeurs physiques : un décalage axial (que l'on peut désigner par sa dénomination anglaise « *Axial Offset* » abrégée en AO) et un déséquilibre axial de puissance que l'on peut désigner par les notations *"ΔI"* ou « DPAX »). Ces deux grandeurs sont définies par les formules suivantes :

$$AO = \frac{P_h - P_b}{P_h + P_b}$$

$$DPAX = \frac{P_h - P_b}{P_n}$$

avec $P_n$ la puissance nominale du réacteur.

Le terme $P_h + P_b = P_t$ désigne la puissance totale instantanée dans le réacteur. Le décalage axial est une valeur relative de puissance par rapport à la puissance totale.

Le déséquilibre axial « DPAX » est une valeur relative de puissance par rapport à la puissance nominale $P_n$, puissance nominale qui n'est pas nécessairement égale à la puissance totale instantanée Pt.

*Oscillation Xénon*

Le Xénon 135 ($^{135}$Xe) est un élément fortement absorbeur de neutrons pouvant être produit par fission mais aussi et surtout par décroissance de l'Iode 135 ($^{135}$I), un autre produit de la réaction de fission. La présence du Xénon 135 au sein d'un réacteur entraîne une baisse importante de réactivité, faisant de lui un poison neutronique qui nuit à l'entretien de la réaction en chaîne.

Après un temps de fonctionnement du réacteur suffisamment long (environ 60 heures) à puissance constante du réacteur, la concentration en Xénon 135 atteint un premier équilibre dans le réacteur. Cet équilibre est atteint lorsque la production de Xénon 135 devient proportionnelle à la puissance du réacteur et que sa destruction devient proportionnelle à la concentration en Iode 135.

A l'échelle macroscopique, si l'on diminue la puissance du réacteur une fois cet équilibre atteint, la concentration en Iode 135 décroît exponentiellement jusqu'à atteindre une nouvelle valeur d'équilibre tandis que la concentration en Xénon 135 passe d'abord par un maximum (on parle de pic xénon) avant de décroître jusqu'à atteindre une nouvelle valeur d'équilibre. Le temps nécessaire pour atteindre ce pic (entre 7 et 8 heures) ainsi que la valeur d'antiréactivité qui lui correspond dépendent de la puissance du réacteur avant et après la baisse. La réactivité ρ est une grandeur sans unité exprimée en pcm (partie pour cent mille) qui se définit comme une variation relative du coefficient effectif de multiplication de la population neutronique $k_{eff}$ lui-même défini comme le rapport de la population de neutrons de la présente génération et de la population de neutrons de la génération précédente :

$$\rho = \frac{k_{eff} - 1}{k_{eff}}$$

Le signe de la réactivité ρ indique si la population de neutrons est stable (ρ= 0), en augmentation (ρ > 0), ou en diminution (ρ < 0).

On parlera d'antiréactivité lorsque ρ < 0

Inversement, si l'on augmente la puissance, la concentration en Iode 135 croît jusqu'à atteindre une nouvelle valeur d'équilibre tandis que la concentration en Xénon 135 passe d'abord par un minimum (on parle de dépression Xénon) avant d'augmenter jusqu'à atteindre une nouvelle valeur d'équilibre. Le temps nécessaire pour atteindre ce minimum (entre 2 et 3 heures) ainsi que la valeur d'antiréactivité qui lui correspond vont dépendre du niveau de puissance avant et après la hausse.

Localement, une variation de puissance, par insertion des grappes, se traduit par un effet axial sur la distribution du flux de neutrons et entraîne une modification de la distribution de l'Iode 135 et du Xénon 135.

La figure 1 illustre l'insertion puis le retrait d'une barre de poison neutronique ou grappe 3 s'étendant selon la direction verticale z.

L'effet de cet barre 3 insérée puis retirée peut être décomposé en cinq phases correspondants aux lettres A à E en figure 1. Cette manœuvre impacte notamment la concentration en Xénon 9 en fonction de la hauteur z dans le réacteur, et la concentration en Iode 7 en fonction de la hauteur z dans le réacteur

L'insertion puis le retrait de la barre 3 peut conduire à des oscillations de la concentration en Xénon 9 entre la moitié haute et la moitié basse du réacteur communément appelées oscillations xénon.

Cette oscillation se décompose en cinq phases correspondants aux lettres A à E représentées en figures 1.

La phase A correspond à un régime permanent dans lequel la distribution axiale de puissance 3 et les concentrations 7 et 9 en Iode 135 et Xénon 135 sont en phase.

La phase B correspond à l'insertion d'un groupe de grappes 3 dans le milieu réactionnel du réacteur 1. Cela induit une modification de la distribution axiale de puissance : la puissance baisse dans la moitié haute mais reste à peu près constante dans la moitié basse. L'équilibre entre la production, par décroissance radioactive de l'Iode 135 et la disparition de Xénon 135 par capture d'un neutron ou par décroissance radioactive est rompu. Dans les premiers instants de ce type de transitoires, les distributions en Iode 135 et Xénon 135 restent inchangées tandis que la puissance dans le bas du cœur augmente et celle en haut diminue.

Durant la phase C on observe dans le haut du cœur, du fait de la baisse de flux de neutrons provoquée par l'insertion du groupe de grappes, la concentration 7 en Iode 135 qui diminue et le Xénon 135 qui disparaît plus lentement et commence à s'accumuler : la concentration 9 en Xénon 135 augmente provoquant alors une baisse de réactivité. Dans le bas du cœur, du fait de la hausse de flux, la concentration 7 en Iode 135 augmente et la concentration 9 en Xénon 135 diminue car le Xénon 135disparaît plus rapidement. La réactivité augmente dans la moitié basse. Cette redistribution de la réactivité entre le haut et le bas du cœur tend à amplifier le phénomène de déséquilibre avec un maximum du déséquilibre axial atteint au bout de 7 à 8 heures et ce, même si l'on extrait le groupe de barres inséré

La phase D correspond à la période située après que le maximum du déséquilibre axial ait été atteint. Dans le haut du cœur, la diminution de concentration 7 en Iode 135 entraîne un déficit de production du Xénon 135 dont la concentration 9 commence à décroître, provoquant ainsi une augmentation de la réactivité. Dans le bas du cœur, l'accumulation de l'Iode 135 compense la disparition du Xénon 135 dont la concentration 9 commence à augmenter, entraînant ainsi une baisse de la réactivité. Ce processus se poursuit au cours du temps jusqu'à obtenir une répartition spatiale de la puissance proche de la situation initiale au bout de 17 à 18 heures. À ce moment-là, la concentration 7 en Iode 135 et la concentration 9 Xénon 135 sont, elles, fortement déséquilibrées. La courbe du Xénon en phase D se trouve dans une position intermédiaire entre la courbe du Xénon en phase C et la courbe du Xénon en phase E.

En phase E, le phénomène s'inverse et le pic de puissance bascule vers le haut du cœur. La période de cette oscillation est de l'ordre de 35 heures.

Les déformations de flux de neutron induites par le mouvement des grappes de contrôle et/ou par les oscillations Xénon peuvent être à l'origine de la formation de points chauds à l'intérieur du réacteur conduisant à une élévation excessive de température du combustible pouvant lui faire perdre son intégrité. Pour prévenir ce risque, le déséquilibre axial de puissance doit être obligatoirement contrôlé pour le pilotage des réacteurs. Les opérateurs s'appuient sur un diagramme de pilotage représentant le déséquilibre axial en fonction de la puissance totale instantanée. Ce diagramme illustre en particulier une zone de sécurité ou domaine de fonctionnement du réacteur qui est une zone autour d'une droite de référence. Le réacteur doit fonctionner dans la zone proche de la droite de référence. Pour piloter les réacteurs de manière sûre et efficace, les opérateurs ont donc besoin de disposer d'outils capables de prévoir le déséquilibre axial de puissance DPAX en fonction de la stratégie de pilotage envisagée, leur permettant ainsi d'évaluer cette stratégie en amont et d'en envisager éventuellement une autre qui permettra de limiter plus le déséquilibre axial de puissance.

Les solutions actuelles d'estimation de l'état futur du réacteur ne permettent pas une aide au pilotage satisfaisante. Concrètement il est demandé aux opérateurs de modifier des consignes de puissance et de surveiller l'évolution des principaux paramètres clés du cœur du réacteur nucléaire afin de respecter les contraintes de fonctionnement. Comme évoqué, la variation de puissance et les autres variations qui lui sont associées (variations de la température moyenne du cœur, mouvements des barres de contrôle, évolution de la concentration en acide borique dans le réfrigérant du réacteur, etc.) génèrent des perturbations dont l'effet est difficile à anticiper : l'état du réacteur, et donc sa réponse aux sollicitations, évolue sans cesse ; les phénomènes en jeu sont complexes et caractérisés par des temps caractéristiques très hétérogènes, de quelques secondes à plusieurs heures, et les évolutions de certains paramètres clés, tels que la concentration et la répartition spatiale du xénon dans le réacteur, ne sont pas mesurables et donc non connus par l'opérateur.

Ainsi, pour que les réacteurs nucléaires des centrales nucléaires puissent être techniquement en mesure de faire varier rapidement la puissance électrique produite en fonction du besoin, et cela plus fréquemment que les pratiques antérieures, tout en restant dans les domaines de fonctionnement et de sûreté qui leurs sont assignés, il existe le besoin de disposer d'un outil d'estimation fiable et rapide pour prévoir les effets futures et retardés de chaque action de l'opérateur, de manière aisée, cela dans un contexte de planning tendu.

Une méthode antérieure d'estimation des valeurs futures dans un réacteur nucléaire est décrite dans le document de brevet WO 94/12984 A1.

## EXPOSE DE L'INVENTION

Un but de l'invention est de proposer un procédé d'estimation d'une valeur future d'un déséquilibre axial de puissance dans un réacteur nucléaire.

Le but est atteint dans le cadre de la présente invention grâce à un procédé d'estimation d'une valeur future d'un déséquilibre axial de puissance dans un réacteur nucléaire, le procédé comprenant les étapes suivantes :

- obtention d'une séquence de valeurs successives d'une consigne de puissance du réacteur,

- pour chaque variable d'une pluralité de variables du réacteur, détermination d'une séquence de valeurs successives de la variable, la séquence représentant des variations futures de la variable, les variations étant estimées en prenant en compte la consigne de puissance, la pluralité de variables du réacteur comprenant une concentration en xénon dans une moitié haute du réacteur et une concentration en xénon dans une moitié basse du réacteur,

- détermination d'une séquence de valeurs successives du déséquilibre axial de puissance, en prenant en compte les séquences de la pluralité de variables du réacteur,

la détermination de la séquence du déséquilibre axial de puissance utilisant un module d'apprentissage automatique préalablement entraîné sur des données historiques de réacteurs, et

la détermination de la séquence de la concentration en xénon dans la moitié haute du réacteur et la détermination de la séquence de la concentration en xénon dans la moitié basse du réacteur utilisant un modèle d'évolution d'une concentration en iode et d'une concentration en xénon en fonction d'un flux de neutrons

Un tel procédé est avantageusement et optionnellement complété par les différentes caractéristiques suivantes prises seules ou en combinaison :

- pour au moins une variable de la pluralité de variables, la détermination de la séquence temporelle de la variable comprend une mesure de la variable ;

- la pluralité de variables du réacteur comprend au moins l'une parmi une position d'un dispositif configuré pour absorber des neutrons dans le réacteur, une température moyenne mesurée de la cuve du réacteur, un débit d'un fluide caloporteur circulant dans le réacteur, une concentration en une espèce chimique dans le fluide caloporteur, l'espèce chimique étant configurée pour absorber des neutrons dans le réacteur, et un taux de combustion d'un combustible nucléaire contenu dans le réacteur ;

- la détermination de la séquence du déséquilibre axial de puissance prend également en compte au moins l'une parmi une température moyenne de référence de la cuve, un type de gestion du combustible correspondant à un fractionnement d'un cœur du réacteur lors d'un renouvellement du combustible, un enrichissement de noyaux fissiles du réacteur et un type de noyaux lourds du réacteur ;

- la détermination de la séquence de la pluralité de variables du réacteur et la détermination de la séquence du déséquilibre axial de puissance prend en compte un scénario de commande du réacteur correspondant à une séquence de valeurs successives d'au moins une variable contrôlable par un opérateur ;

- une étape de détermination d'un score du scénario de commande, le score étant de préférence une valeur d'une grandeur choisie parmi un volume d'effluent produits, un écart moyen au déséquilibre axial de référence et une distance moyenne à des limites d'un domaine de fonctionnement du réacteur ; et

- le scénario de commande est un premier scénario de commande, les étapes du procédé étant réalisées une seconde fois en remplaçant le premier scénario par un deuxième scénario de commande du réacteur correspondant à une autre séquence de valeurs successives d'au moins une variable contrôlable, le procédé comprenant de préférence une étape de comparaison des scores du premier scénario et du deuxième scénario.

L'invention porte également sur un programme d'ordinateur comprenant des instructions adaptées à la mise en œuvre d'au moins une des étapes du procédé tel que décrit ci-avant lorsque ledit programme est exécuté sur un ordinateur.

L'invention porte enfin sur un dispositif d'estimation d'une valeur future d'un déséquilibre axial de puissance dans un réacteur nucléaire, le dispositif comprenant un module de calcul configuré pour mettre en œuvre le procédé tel que décrit ci-avant, le module de calcul étant configuré pour

- obtenir une séquence de valeurs successives d'une consigne de puissance du réacteur,

- déterminer, pour chaque variable d'une pluralité de variables du réacteur, une séquence de valeurs successives de la variable, la séquence représentant des variations futures de la variable, les variations étant estimées en prenant en compte la consigne de puissance, la pluralité de variables du réacteur comprenant une concentration en xénon dans une moitié haute du réacteur, et une concentration en xénon dans une moitié basse du réacteur,

- déterminer une séquence de valeurs successives du déséquilibre axial de puissance en prenant en compte les séquence de la pluralité de variables du réacteur,

le module de calcul comprenant un module d'apprentissage automatique préalablement entraîné sur des données historiques de réacteurs, et
le module de calcul utilisant un modèle d'évolution d'une concentration en iode et d'une concentration en xénon en fonction d'un flux de neutrons, de sorte à déterminer la séquence de la concentration en xénon dans la moitié haute du réacteur et la séquence de la concentration en xénon dans la moitié basse du réacteur.

## DESCRIPTION DES FIGURES

D'autres caractéristiques et avantages de l'invention ressortiront encore de la description qui suit, laquelle est purement illustrative et non limitative, et doit être lue en regard des dessins annexés sur lesquels :

- la figure 1, déjà évoquée, est une illustration schématique en rapport avec un phénomène d'oscillation Xénon ;

- la figure 2 est une illustration schématique en rapport avec un mode de réalisation d'un procédé d'estimation d'un déséquilibre axial de puissance dans un réacteur ;
- les figures 3 et 6 illustrent schématiquement un déséquilibre axial de puissance en fonction du temps, les figures 4 et 7 illustrent schématiquement une consigne de puissance en fonction du temps, et les figures 5 et 8 illustrent schématiquement une consigne de puissance en fonction d'un déséquilibre axial de puissance.

## DESCRIPTION DETAILLEE DE L'INVENTION

*Procédé d'estimation d'une valeur future d'un déséquilibre axial de puissance*

En rapport avec la figure 2, un procédé d'estimation d'une valeur future d'un déséquilibre axial de puissance dans un réacteur nucléaire 11 est proposé.

Le déséquilibre axial de puissance dans un réacteur nucléaire a été précédemment introduit sous la notation « DPAX », il s'agit d'une valeur relative de puissance par rapport à la puissance nominale $P_n$ du réacteur.

$$DPAX = \frac{P_h - P_b}{P_n}$$

Lors d'une première étape, une séquence 12 de valeurs successives d'une consigne de puissance P du réacteur est obtenue. Une séquence de valeurs successives prises par une grandeur est également désignée ci-après par l'expression « série temporelle ».

Cette étape correspond notamment à la situation où un opérateur qui pilote un réacteur nucléaire doit réaliser un transitoire de puissance 12 de ce réacteur. L'opérateur entre un programme de charge c'est-à dire une évolution de la puissance électrique P du réacteur en fonction du temps t. Cette évolution peut notamment être donnée sous la forme d'une série temporelle de valeurs d'une puissance à respecter, c'est-à-dire de valeurs d'une consigne de puissance, en fonction du temps. Une consigne de puissance est donc ici entendue comme une grandeur physique homogène à une puissance et qui est la puissance à respecter.

Lors d'une deuxième étape 18 du procédé, le programme de charge est traité pour déterminer des variations futures 19 d'une pluralité de variables du réacteur. Ces différentes variables sont appelées variables explicatives au sens où elles sont utilisées pour estimer les valeurs d'une autre variable qui est le déséquilibre axial de puissance. Il est donc déterminé des valeurs hypothétiques que prendra chacune des variables explicatives. Autrement dit, on détermine pour chaque variable d'une pluralité de variables du réacteur, une série temporelle de la variable représentant des variations futures de la variable estimées en prenant en compte la consigne de puissance. La série temporelle peut également comprendre des variations passées de la variable.

Parmi les variables explicatives, il y a la concentration en Xénon dans la moitié haute du réacteur et la concentration en Xénon dans la moitié basse du réacteur. Ces deux variables sont calculées à l'aide d'un modèle d'évolution d'une concentration en Iode et d'une concentration en Xénon en fonction d'un flux de neutrons. Ce modèle se fonde en particulier sur les équations d'évolution de la concentration en Iode et en Xénon suivantes

$$\frac{dC_I}{dt} = \gamma_I \Sigma_f \phi - \lambda_I C_I$$

$$\frac{dC_{Xe}}{dt} = \gamma_{Xe} \Sigma_f \phi + \lambda_I C_I - \lambda_{Xe} C_{Xe} - \sigma_a^{Xe} C_{Xe} \phi$$

déclinées pour chaque moitié, haute et basse, du réacteur.

Dans ces équations, $\phi$ désigne le flux de neutrons, $C_I$ désigne la concentration en Iode, $C_{Xe}$ désigne la concentration en Xénon, $\gamma_I$ désigne le rendement de fission de l'Iode et $\gamma_{Xe}$, le rendement de fission du Xénon respectivement. Un rendement de fission d'un produit correspond à la probabilité ou taux de production de ce produit lorsque la fission se produit. $\Sigma_f$ désigne la section efficace macroscopique de fission, c'est-à-dire la probabilité macroscopique de fission des noyaux lourds reliée à la probabilité par unité de temps qu'un neutron rencontre un noyau lourd et qu'une fission se produise. $\lambda_I$ désigne le taux de décroissance radioactive de l'Iode et $\lambda_{Xe}$ le taux de décroissance radioactive du Xénon. Enfin, $\sigma_a^{Xe}$ désigne la section efficace microscopique d'absorption de neutrons du Xénon reliée à la probabilité par unité de temps qu'un neutron rencontre un noyau de Xénon 135 et qu'il soit capturé (ce qui ne génère pas de fission).

$\gamma_I \Sigma_f \phi$ est un terme représentant la production en iode 135.

- $\lambda_I C_I$ est un terme représentant la disparition en iode 135.

$\gamma_{Xe} \Sigma_f \phi + \lambda_I C_I$ est un terme représentant la production en xénon 135. $-\lambda_{Xe} C_{Xe} - \sigma_a^{Xe} C_{Xe} \phi$ est un terme représentant la disparition en xénon 135.

Lors d'une troisième étape du procédé, une série temporelle 13 du déséquilibre axial de puissance DPAX est déterminée en prenant en compte les séries temporelles de la pluralité de variables du réacteur. La série temporelle représente en fonction du temps t des variations futures du déséquilibre axial de puissance estimées en prenant en compte les séries temporelles de la pluralité de variables du réacteur et le programme de charge.

Cette détermination de la série temporelle du déséquilibre axial de puissance est effectuée en utilisant un module d'apprentissage automatique 14 préalablement entraîné sur des données historiques 15 de réacteurs. Il est à noter que le module d'apprentissage peut être réentraîné à la fin d'un cycle de fonctionnement du réacteur pour prendre en compte dans l'apprentissage des données d'exploitation plus récentes. Cet entraînement du modèle sur toute la base prend moins de 4 heures.

Les données historiques 15 des réacteurs sont structurées au cours d'une étape d'extraction 16 de sorte à obtenir des données historiques 17 structurées d'exploitation. Notamment, au cours de cette étape d'extraction, les données peuvent être enrichies de valeurs historiques de décalage axial AO et/ou de déséquilibre axial DPAX. On peut chercher en particulier à déterminer le déséquilibre axial DPAX à partir du décalage axial AO lorsqu'il s'agit de la seule variable disponible, les mesures du décalage axial AO étant généralement plus bruitées que celles du déséquilibre axial DPAX, notamment lorsque la puissance instantanée du réacteur est faible.

Le module d'apprentissage automatique 14 est configuré pour être entrainé sur des sets de données historiques 15 issues d'un ou plusieurs réacteurs. Ce module d'apprentissage automatique peut notamment comprendre deux sous-modules.

Le premier sous-module est configuré pour apprendre une relation entre un ensemble de variables explicatives et le déséquilibre axial de puissance. Après avoir appris cette relation à partir des données historiques 17 d'exploitation des réacteurs, le premier sous-module traite des valeurs 19 des variables explicatives récentes et hypothétiques pour fournir une première prévision du déséquilibre axial de puissance sur les prochaines heures. Plusieurs algorithmes peuvent être utilisés pour mettre ce premier sous-module en œuvre.

Dans une première option, on utilise des forêts d'arbres de décision, telles que les forêts aléatoires (également désignées sous l'expression anglaise « *Random Forest* »), ou les algorithmes de stimulation et les algorithmes de stimulation par gradient (également désignés sous l'expression anglaise « *Boosting algorithms* » ou « *Gradient Boosting algorithms* »).

Dans une deuxième option, on utilise des modèles additifs généralisés (également désignés sous l'expression anglaise « *generalized additive model* » ou « GAM »).

Dans une troisième option, on utilise des réseaux de neurones.

Le deuxième sous-module met en œuvre une correction de l'estimation produite par le premier sous-module. En particulier, le deuxième sous-module peut mettre en œuvre une simple correction d'un biais de prédiction à un instant initial, c'est-à-dire une différence entre le déséquilibre prévu et le déséquilibre mesuré à l'instant initial de la prévision. Le deuxième sous-module peut également mettre en œuvre un modèle plus complexe ayant été entraîné à prédire l'erreur de prédiction du premier sous-module en s'appuyant sur les dernières valeurs prédites et mesurées du déséquilibre axial de puissance. Le deuxième sous-module peut notamment alors utiliser un modèle autorégressif ou processus autorégressif qui est un modèle de régression pour séries temporelles dans lequel la série est expliquée par ses valeurs passées plutôt que par d'autres variables. En variante le deuxième sous-module peut utiliser un réseau de neurones de type Long Short Term Memory (LSTM) qui est une architecture particulière de réseau de neurones.

L'utilisation d'un module d'apprentissage automatique, et un modèle d'évolution d'une concentration en Iode dans le réacteur et d'une concentration en Xénon dans le réacteur en fonction d'un flux de neutrons dans le réacteur permet d'estimer de manière fiable et rapide le déséquilibre axial de puissance.

Les principaux intérêts de ce procédé sont les suivants.

Tout d'abord, le procédé permet une plus grande facilité d'utilisation : le modèle ne nécessite aucun calage au-delà de la phase d'apprentissage qui est réalisée en amont du déploiement. Autrement dit, cette étape n'est pas à la charge de l'opérateur qui pilote le réacteur et plus généralement l'utilisateur du modèle.

Ensuite, la précision atteinte dans les estimations du déséquilibre axial est satisfaisante sur une plage temporelle de l'ordre des transitoires de puissance observés, de quelques heures à une douzaine d'heures. L'application du procédé sur des données du parc nucléaire d'EDF - Electricité de France - entre 2008 et 2021 permet de comparer les estimations aux mesures historiques. L'erreur absolue constatées entre les prévisions du déséquilibre axial DPAX faites par l'outil selon la présente invention et les valeurs réelles du déséquilibre axial DPAX sont inférieures à 2% pour 95% des données.

Enfin, le procédé permet de réduire le temps de calcul notamment en comparaison au temps de calcul nécessaire aux codes de calculs 3D : une prévision sur plusieurs heures est générée en une fraction de secondes par le procédé contre plusieurs minutes pour un code 3D. La rapidité de calcul de l'outil permet de traiter un très grand nombre de données, par exemple une trentaine de minutes suffisent pour évaluer les prévisions de l'outil sur 11700 transitoires de puissance. Avantageusement, en exploitation, pour l'évaluation de la stratégie à suivre lors d'un transitoire, la durée de traitement est de l'ordre du dixième de seconde. Avantageusement, l'opérateur peut au cours d'un transitoire de puissance qui a fait l'objet d'une première estimation de l'évolution du déséquilibre axial de puissance, relancer un deuxième procédé d'estimation avant la fin de l'horizon choisi pour la première estimation. L'opérateur peut ainsi disposer d'une seconde estimation, ce qui permet de réduire les écarts de prévision.

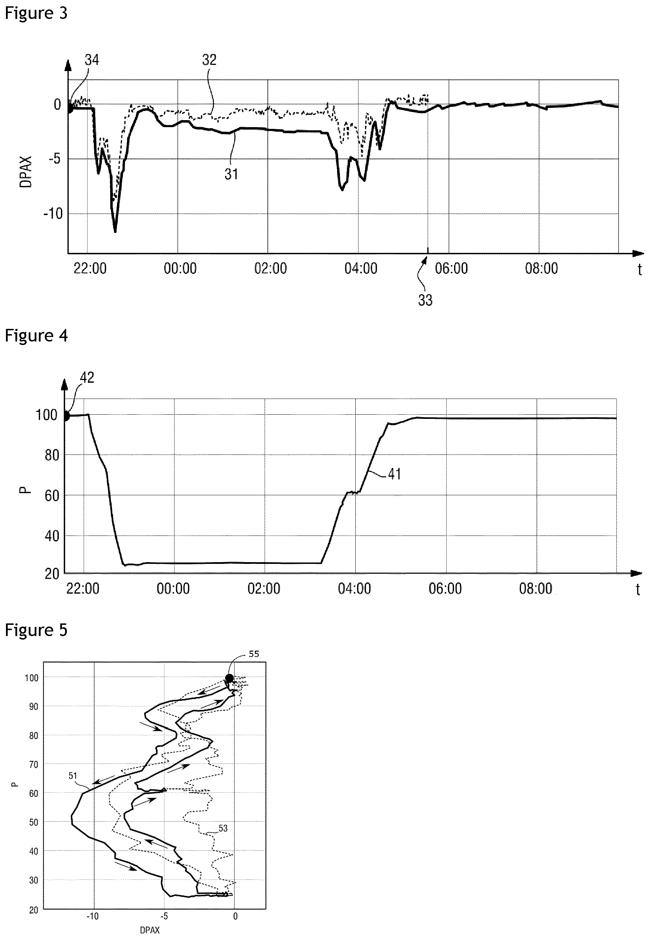

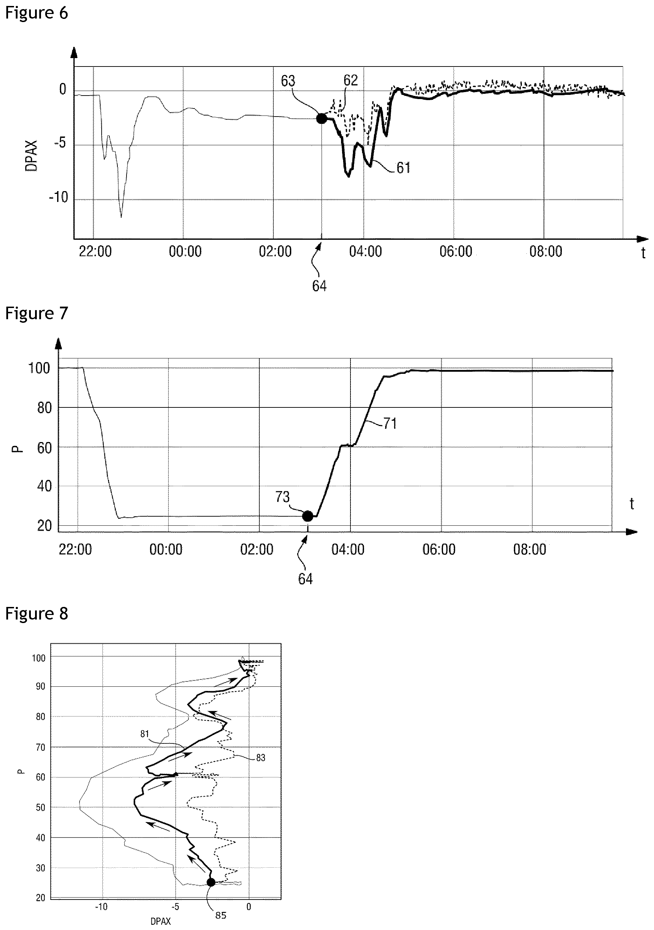

Les figures 3, 4 et 5 d'une part et les figures 6, 7 et 8 d'autre part illustrent une application du procédé.

Les figures 3 et 6 sont relatives au déséquilibre axial DPAX en fonction du temps t : les courbes 31 et 61 représentent le déséquilibre axial DPAX mesuré, les courbes 32 et 62 représentent le déséquilibre axial DPAX estimé selon le procédé. L'intervalle temporel sur lequel sont tracées les courbes 31 et 61 est identique à l'intervalle temporel sur lequel sont tracées les courbes 32 et 62. Cet intervalle est gradué en heures de journée, la valeur 00 :00 correspondant à minuit qui sépare la fin d'une première journée à gauche et le début de la journée suivante à droite.

Les figures 4 et 7 représentent la puissance thermique fournie par le cœur en fonction du temps t : les courbes 41 et 71 représentent la consigne de puissance. L'intervalle temporel sur lequel est tracée la courbe 41 est identique à l'intervalle temporel sur lequel est tracée la courbe 71. Cet intervalle est gradué en heures de journée, la valeur 00 :00 correspondant à minuit qui sépare la fin d'une première journée à gauche et le début de la journée suivante à droite. Cet intervalle temporel est également identique à l'intervalle temporel sur lequel sont tracées les courbes 31, 32, 61 et 62.

Les courbes 41 et 71 montrent un transitoire de puissance avec successivement dans le temps une diminution de la puissance depuis une valeur haute à une valeur basse, suivi d'un palier de puissance à la valeur basse et enfin une remontée de puissance depuis la valeur basse à la valeur haute.

Les figures 5 et 8 représentent les évolutions du déséquilibre axial DPAX, mesurées et estimées lorsque la puissance thermique du réacteur suit un transitoire selon un profil programmé. C'est une relation paramétrique entre deux variables fonction chacune du temps. Plus précisément, les tracés de la figure 5 sont les chemins parcourus par un point $(P_{th}(t), DPAX(t))$ à partir d'une origine des temps 55. Ces chemins se déduisent des figures 3 et 4 de même origine des temps (34,42). Les courbes des figures 3 et 4 sont représentatives des fonctions $P_{th}= P_{th}(t)$ et $DPAX= DPAX(t)$ ; variables temporelles.

De même les tracés de la figure 8 sont les chemins parcourus par un point $(P_{th}(t), DPAX(t))$ à partir d'une origine des temps 85, chemins se déduisant des figures 6 et 7 de même origine des temps (63,73) et dont les courbes respectives sont représentatives des fonctions $P_{th}= P_{th}(t)$ et $DPAX= DPAX(t)$ ; variables temporelles.

Le tracé 51 en figure 5 et le tracé 81 en figure 8 représentent l'évolution du déséquilibre axial DPAX mesuré pendant l'évolution de la puissance thermique selon un transitoire de profil programmé. Les flèches indiquent le parcours des traces 51 et 81 dans le sens chronologique.

De même, la courbe 53 en figure 5 et le tracé 83 en figure 8 représentent le déséquilibre axial DPAX estimé selon le procédé de la présente invention pendant l'évolution de la puissance thermique selon un transitoire de profil programmé.

Les figures (3,4,5) et (6,7,8) correspondent à des représentations dans un diagramme de pilotage à disposition des opérateurs en salle de commande.

Le procédé permet d'estimer les valeurs futures du déséquilibre axial DPAX pour un nombre d'heures que l'on peut fixer en amont du procédé, en fonction d'un horizon temporel désiré. Les figures 3 à 8 correspondent à un horizon temporel de 8 heures. C'est pourquoi, sur la figure 3, la courbe 32 correspondant au déséquilibre axial DPAX estimé s'arrête à l'instant 33 en sortie du transitoire. L'estimation correspondant à la courbe 32 s'étale sur 8 heures d'environ 21h30 jusqu'à 5h30 le lendemain matin.

Il est à noter que le nombre d'heures d'estimation peut être diminué ou augmenté par l'opérateur.

L'avancement dans le temps est illustré sur la figure 3 par le curseur 34, sur la figure 4 par le curseur 42, sur la figure 6 par le curseur 63 et sur la figure 7 par le curseur 73. En figures 3 et 4, les curseurs 34 et 42 sont placés temporellement en amont du transitoire tandis que sur les figures 6 et 7 les curseurs 63 et 73 sont placés temporellement sur le palier de puissance à la valeur basse et en amont du la remontée de puissance depuis la valeur basse à la valeur haute.

Lors de la mise en œuvre du procédé, l'opérateur entre le transitoire de puissance en mémoire de sorte à réaliser la première étape du procédé. La séquence de valeurs successives de la consigne de puissance du réacteur obtenue peut être affichée sous la forme d'une graphique tel qu'illustré en figures 4 et 7.

Lorsque la troisième étape du procédé est réalisée, la série temporelle du déséquilibre axial de puissance DPAX déterminée peut être également affichée tel qu'illustré par les courbes 32 et 62. Il est à noter que si plusieurs estimations sont successivement lancées, notamment lors d'un transitoire, les différentes courbes du déséquilibre axial de puissance DPAX estimées peuvent être affichées simultanément.

L'exemple des figures 3 à 8 correspond à un transitoire réel ayant été effectué dans le passé sur un des réacteurs du parc nucléaire français.

Les courbes 32 et 62 d'estimation du déséquilibre axial de puissance DPAX peuvent être comparées aux courbes 31 et 61 du déséquilibre axial de puissance DPAX réellement mesuré au cours de ce transitoire.

Dans cet exemple, les valeurs hypothétiques sont en fait les véritables valeurs mesurées de la pluralité de variables au cours du transitoire, c'est-à-dire que l'on a utilisé les données historiques réellement mesurées sur site lors du transitoire en question.

En option, le procédé peut comprendre une étape de mesure pour au moins une variable de la pluralité de variables. La détermination de la séquence temporelle de cette variable ou ces variables comprend alors une mesure de la variable ou des variables. La série temporelle comprend alors des variations passées de la variable.

Parmi la pluralité de variables du réacteur on peut notamment utiliser les variables suivantes.

Une première variable est la position d'un dispositif configuré pour absorber des neutrons dans le réacteur. Plus précisément il s'agit de la position axiale de ce dispositif qui peut être maintenu au-dessus de la zone où circulent les neutrons ou bien descendu dans cette zone. Plus le dispositif est positionné bas dans la structure et plus il capture de neutrons.

Un tel dispositif peut comprendre différentes unités ou groupes de barres.

Un premier groupe de barres forme un groupe de compensation de puissance (que l'on peut désigner sous l'abréviation GCP). Le GCP a pour but de compenser le défaut de puissance, c'est-à dire l'antiréactivité due à la variation de puissance. Le GCP est composé de quatre groupes de grappes qui s'insèrent dans le coeur respectivement l'un après l'autre selon la suite de séquences suivantes : dans une première séquence, le premier groupe s'insère jusqu'à atteindre une certaine profondeur, ensuite dans une deuxième séquence le deuxième groupe s'insère jusqu'à une certaine profondeur avant que, dans un troisième séquence le troisième groupe ne s'insère jusqu'à une certaine profondeur, et pour finir dans une quatrième séquence le quatrième groupe s'insère jusqu'à une certaine profondeur. Chaque séquence ne peut se produire avant que la séquence précédente ne soit terminée. Ainsi les grappes présentent à chaque instant un recouvrement relatif entre deux grappes distinctes prises deux à deux. Le groupe GCP peut comprendre un groupe de grappes grises qui sont relativement peu absorbantes par rapport à des grappes « noires » définies ci-après. Les grappes grises permettent de limiter l'impact sur le déséquilibre de puissance.

Un tel dispositif peut comprendre un deuxième groupe de barres qui est un groupe régulation de température (que l'on peut désigner sous l'abréviation groupe R) de barres absorbantes, noires. Le groupe R est un autre groupe permettant de faire de la régulation en combinaison avec les variations de la concentration en Bore.

En rapport avec la première variable, il est possible de déterminer les variations futures de celle-ci de la manière suivante.

Pour le groupe de compensation de puissance GCP, la position de ce groupe peut être liée à la puissance thermique du réacteur par une relation. Cette relation est établie lors d'un essai périodique dédié au cours duquel on fait varier la puissance du réacteur afin de déterminer la position des GCP permettant de compenser efficacement les variations de puissance. On peut choisir une situation de décalibrage en imposant que la position effectivement commandée des barres du groupe de compensation de puissance GCP ne soit pas exactement la position donnée par la relation. On peut notamment commander la position des barres du groupe de compensation de puissance GCP par un décalibrage constant.

Pour le groupe de régulation de température, ou groupe R, la position des barres de ce groupe R peut être choisie constante. Dans ce cas, la criticité dans le réacteur est obtenue en réglant la concentration en Bore dans le fluide caloporteur.

La criticité est en lien avec la population de neutrons dans le réacteur. Lorsque la criticité est atteinte, c'est-à-dire lorsque le régime est critique, la population de neutrons est constante au cours du temps. Atteindre la criticité permet d'entretenir la réaction exothermique dans le réacteur.

Il est à noter que la première variable étant contrôlable, les variations futures déterminées peuvent être librement modifiée par l'utilisateur.

Une deuxième variable est la température moyenne mesurée de la cuve du réacteur. Pour déterminer les variations futures de cette deuxième variable, la température moyenne mesurée de la cuve est supposée égale à la température de référence.

Une troisième variable est la température moyenne de référence de la cuve. La température moyenne de référence correspond à la température qui devrait régner au sein de la cuve compte-tenu de la puissance fournie par le réacteur tandis que la température moyenne mesurée correspond à la température réellement mesurée de la cuve. Pour déterminer les variations futures de cette troisième variable, la température moyenne de référence est déterminée à partir d'une relation fonction de la puissance thermique future du réacteur.

Une quatrième variable est un débit du fluide caloporteur circulant dans le réacteur. Le fluide caloporteur est le fluide primaire qui permet la thermalisation des neutrons et la transmission de chaleur depuis le cœur de réacteur vers le circuit secondaire. Pour déterminer les variations futures de cette quatrième variable, le débit primaire peut être établi à partir de la puissance thermique future du réacteur. Plus précisément, une valeur « nominale » du début au début du cycle est définie au cours d'un essai périodique dédié. Ensuite cette valeur « nominale » varie en fonction de la puissance thermique selon une loi linéaire empirique.

Une cinquième variable est une concentration en une espèce chimique dans le fluide caloporteur, l'espèce chimique étant configurée pour absorber des neutrons dans le réacteur. Par exemple cette espèce chimique est le Bore. Les valeurs futures de la concentration en l'espèce chimique comme le Bore peuvent être déterminées à l'aide d'un deuxième modèle statistique utilisant en entrée la concentration en Xénon et la position du dispositif configuré pour absorber des neutrons dans le réacteur. Ce deuxième modèle statistique est semblable au premier modèle d'estimation de valeurs futures du déséquilibre axial de puissance, à la différence que, dans le premier modèle, la concentration en bore est une variable explicative et que, dans le deuxième modèle, la concentration en bore est la variable expliquée ou variable de réponse.

Lorsque les variations futures de la cinquième variable, et notamment la concentration en bore sont imposées, alors il est nécessaire d'utiliser une autre variable d'ajustement, comme notamment le groupe R.

Si la concentration en Bore n'est pas fournie par l'opérateur, le modèle de prévision n'utilise pas le Bore comme variable explicative.

Une sixième variable est un taux de combustion d'un combustible nucléaire contenu dans le réacteur. Pour déterminer les variations futures de cette sixième variable, le taux de combustion futur du combustible est considéré comme étant égal au produit de la puissance thermique par le temps de fonctionnement, produit que l'on divise ensuite par la masse initiale de combustible. On peut également utiliser l'intégrale de la puissance thermique sur le temps de fonctionnement, intégrale que l'on divise ensuite par la masse initiale de combustible.

En outre, la détermination de la série temporelle du déséquilibre axial de puissance peut également être effectuée en prenant en compte un type de gestion du combustible correspondant à un fractionnement d'un cœur du réacteur lors d'un renouvellement du combustible, un enrichissement de noyaux fissiles du réacteur et un type de noyaux lourds du réacteur Le type de gestion du combustible et le type de noyaux lourds sont des variables catégorielles et restent constantes tout au long d'un cycle. Par exemple, le type de noyaux lourds du réacteur correspond aux catégories uranium enrichi, uranium retraité, plutonium, etc...

La détermination de la série temporelle de la pluralité de variables du réacteur et la détermination de la série temporelle du déséquilibre axial de puissance peut aussi prendre en compte un scénario de commande du réacteur correspondant à une séquence d'au moins une variable contrôlable par un opérateur.

Une variable contrôlable peut être la position d'un dispositif configuré pour absorber des neutrons dans le réacteur ou encore la concentration en une espèce chimique dans le fluide caloporteur.

L'opérateur peut définir un scénario de pilotage, c'est-à-dire les différentes actions qu'il envisage de réaliser. Celles-ci sont relatives aux variables contrôlables comme par exemple les positions des barres de contrôle ou la concentration en Bore. L'opérateur choisit pour au moins une variable contrôlable une séquence de valeurs successives que prend la variable au cours des prochaines heures.

Par exemple, l'opérateur peut se fonder sur une première estimation de l'évolution du déséquilibre axial de puissance sans qu'un scénario ne soit précisé et sur la base de cette simulation, il détermine un scénario et relance une deuxième estimation de l'évolution du déséquilibre axial de puissance qui cette fois prend en compte le scénario déterminé.

Le procédé peut en outre comprendre une étape de détermination d'un score du scénario de commande. Ce score peut être par exemple une valeur d'une grandeur choisie parmi un volume d'effluent produits, un écart moyen au déséquilibre axial de référence et une distance moyenne ou marge moyenne à des limites d'un domaine de fonctionnement du réacteur. D'autres formules de calcul du score peuvent être utilisées.

Le déséquilibre axial de référence correspond à la droite de référence dans le diagramme de pilotage qui représente le déséquilibre axial référence en fonction de la puissance totale instantanée.

Le domaine de fonctionnement du réacteur et donc les limites de ce domaine sont également définies en rapport avec le diagramme de pilotage. Ce domaine de fonctionnement est une zone de sécurité qui se situe autour de la droite de référence. Il peut être par exemple défini par des droites de déséquilibres axiaux limites dans le diagramme. La distance moyenne aux limites peut être évaluée comme la distance à l'une de ces droites de déséquilibres axiaux limites.

Le score du scénario permet de fournir à l'opérateur une évaluation du scénario estimé par rapport à des critères de production d'effluent qui nécessiteront un traitement particulier ou des critères de stabilité du réacteur.

Il est possible de mettre en œuvre une estimation de deux scénarios que l'opérateur compare ensuite sur la base de leurs scores respectifs. Dans ce cas :

- le scénario de commande mentionné précédemment est alors un premier scénario de commande,

- un deuxième scénario est obtenu et transmis en entrée du procédé, ce deuxième scénario correspond à une séquence d'au moins une variable contrôlable par un opérateur, séquence différente de celle qui correspond au premier scénario, et

- les étapes du procédé sont réalisées une seconde fois en remplaçant le premier scénario par le deuxième scénario.

Avantageusement, le procédé comprend une étape de comparaison des scores du premier scénario et du deuxième scénario.

Il est à noter que les différentes courbes correspondant aux différents scénarios estimés peuvent être affichées sur le même graphe pour pouvoir être comparées visuellement par l'opérateur.

Lorsque le procédé comprend une étape de comparaison des scores du premier scénario et du deuxième scénario, le procédé peut en outre fournir un classement des scénarios par ordre croissant pour le critère retenu ou si plusieurs critères ont été calculés chacun de ces critères.

En référence à la figure 2, c'est le dispositif 20 d'aide à la décision qui peut fournir ce classement des scénarios.

Par exemple, en rapport avec le critère du volume d'effluents produits, un premier scénario au cours duquel on estime que 20 m3 d'effluents sont produits est mieux classé qu'un deuxième scénario au cours duquel on estime que 60 m3 d'effluents sont produits.

Par exemple, en rapport avec le critère d'écart au déséquilibre axial de référence, un premier scénario au cours duquel on estime que l'écart au déséquilibre axial de référence est en moyenne égal à 2% est mieux classé qu'un deuxième scénario au cours duquel l'écart au déséquilibre axial de référence est en moyenne égal à 4%.

Par exemple, en rapport avec le critère de marge aux limites du domaine de fonctionnement et le cas échéant à des droites de déséquilibres axiaux limites, un premier scénario au cours duquel on estime que la marge aux limites du domaine de fonctionnement est en moyenne égal à 5% est mieux classé qu'un deuxième scénario au cours duquel la marge aux limites du domaine de fonctionnement est en moyenne égal à 3%.

Le dispositif 20 d'aide à la décision peut également déterminer un score global du scénario qui prend en compte une pluralité de scores. Le dispositif 20 peut alors fournir une suggestion de scénario qui optimise les différents critères pris en compte dans le score global.

Une fois que le scénario est choisi par l'opérateur et que les différentes consignes sont réellement imposées au réacteur, il est possible de réaliser des estimations successivement au cours du temps. Ainsi, le procédé peut être répété toutes les minutes de sorte à fournir chaque minute une nouvelle estimation de l'évolution temporelle de l'évolution du déséquilibre axial DPAX. La fréquence de répétition du procédé peut être déterminée à l'avance par l'opérateur.

Le procédé peut également être utilisé pour lister différents scénarios ou différentes stratégies de pilotage « acceptables ». Cela consiste à trouver des scénarios, au sens de suites d'actions à réaliser par l'opérateur, acceptables, c'est à dire qu'ils permettent de respecter les limites d'insertion et d'extraction des groupes de contrôle et permettant au cœur de rester critique (keff = 1). L'idée est de tester différentes solutions de pilotage possibles que l'on détermine par exemple en perturbant un ou plusieurs scénarios identifiés préalablement comme acceptables. Le procédé peut également classer ces différents scénarios.

Le procédé peut également être utilisé pour évaluer l'impact sur le déséquilibre axial DPAX d'un éventuel besoin d'augmentation rapide en puissance du réacteur.

Pour ce faire, on peut déterminer des transitoires supplémentaires de puissance hypothétiques simulant des augmentations rapides de puissance du réacteur. Il s'agit de créer des séquences de valeurs successives de la puissance du réacteur. Ces séquences prennent comme premières valeurs des valeurs de la séquence de consigne de puissance imposée au réacteur. Ensuite, les étapes du procédé d'estimation du déséquilibre axial sont réalisées sur la base de ces transitoires supplémentaires. On peut déterminer un paramètre de stabilité fondé sur l'écart au déséquilibre axial de référence la distance à la droite de référence ou bien sur la marge aux limites du domaine de fonctionnement. Une alerte peut être émise vers l'opérateur lorsque le paramètre de stabilité franchit un seuil, notamment en cas de risque de dépassement de la marge dont l'opérateur dispose par rapport aux limites de fonctionnement à respecter, ou d'une marge réduite. L'opérateur peut ensuite adapter sa stratégie en conséquence et notamment s'il souhaite pouvoir satisfaire un éventuel besoin d'augmentation rapide en puissance du réacteur. Cette estimation peut être effectuée à fréquence constante, par exemple toutes les demi-heures.

Enfin, le procédé présenté jusqu'à présent peut permettre d'évaluer un impact potentiel d'un téléréglage sur le déséquilibre axial DPAX. On entend par téléréglage un réglage secondaire de la puissance électrique produite par l'installation et conséquemment de la puissance thermique produite par le réacteur qui a pour double objectif d'une part de restaurer la réserve primaire à sa valeur nominale et d'autre part de rétablir des valeurs de puissance prévues aux points d'interconnexion avec le reste du réseau, par exemple le réseau électrique européen. Une téléréglage est envoyé par un gestionnaire du réseau de transport d'électricité, selon un signal qui peut prendre des valeurs comprises entre -1 et +1. Ce téléréglage est envoyé à un ensemble de centrales qui constituent une réserve secondaire afin qu'elles modulent la puissance qu'elles étaient initialement chargées de produire : la valeur -1 du signal de téléréglage correspond à une réduction de puissance de la totalité d'une puissance de réserve. Une puissance de réserve d'une centrale correspond à environ 5% de la puissance nominale ; la valeur de +1 du signal de téléréglage correspond à une augmentation de la totalité de la puissance de réserve.

Pour évaluer l'impact potentiel d'un téléréglage sur un réacteur, le procédé peut estimer une variation de puissance correspondant à un téléréglage selon des étapes proches de celles qui ont été décrites précédemment en rapport avec l'évaluation d'un impact sur le déséquilibre axial DPAX d'un éventuel besoin d'augmentation rapide en puissance du réacteur. Le procédé peut comprendre une étape d'alerte de l'opérateur en cas de risque de dépassement de la marge dont l'opérateur dispose, relativement aux limites de fonctionnement à respecter. L'opérateur peut ensuite adapter sa stratégie en conséquence.

Un objet de l'invention est un programme d'ordinateur comprenant des instructions adaptées à la mise en œuvre d'au moins une des étapes du procédé tel qu'on a pu le présenter jusqu'à présent lorsque ledit programme est exécuté sur un ordinateur.

Un objet de l'invention est un dispositif d'estimation d'une valeur future d'un déséquilibre axial de puissance dans le réacteur nucléaire, le dispositif comprenant un module de calcul configuré pour mettre en œuvre le procédé tel qu'on a pu le présenter jusqu'à présent, le module de calcul étant configuré pour

-   obtenir une séquence de valeurs successives d'une consigne de puissance du réacteur,

-   déterminer, pour chaque variable d'une pluralité de variables du réacteur, une séquence de valeurs successives de la variable, la séquence représentant des variations futures de la variable, les variations étant estimées en prenant en compte la consigne de puissance, la pluralité de variables du réacteur comprenant une concentration en xénon dans une moitié haute du réacteur, et une concentration en xénon dans une moitié basse du réacteur,

-   déterminer une séquence de valeurs successives du déséquilibre axial de puissance en prenant en compte les séquence de la pluralité de variables du réacteur,

le module de calcul comprenant un module d'apprentissage automatique préalablement entraîné sur des données historiques de réacteurs, et
le module de calcul utilisant un modèle d'évolution d'une concentration en iode et d'une concentration en xénon en fonction d'un flux de neutrons, de sorte à déterminer la séquence de la concentration en xénon dans la moitié haute du réacteur et la séquence de la concentration en xénon dans la moitié basse du réacteur.

**Revendications**

**1.**   Procédé mis en œuvre par ordinateur d'estimation d'une valeur future d'un déséquilibre axial de puissance dans un réacteur nucléaire (11), le procédé comprenant les étapes suivantes :

- obtention d'une séquence de valeurs successives d'une consigne de puissance du réacteur (12),
- pour chaque variable d'une pluralité de variables du réacteur, détermination d'une séquence de valeurs successives de la variable (19), la séquence représentant des variations futures de la variable, les variations étant estimées en prenant en compte la consigne de puissance, la pluralité de variables du réacteur comprenant une concentration en xénon dans une moitié haute du réacteur et une concentration en xénon dans une moitié basse du réacteur,
- détermination d'une séquence de valeurs successives du déséquilibre axial de puissance (13), en prenant en compte les séquences de la pluralité de variables du réacteur (19),

la détermination de la séquence du déséquilibre axial de puissance (13) utilisant un module d'apprentissage automatique (14) préalablement entraîné sur des données historiques de réacteurs (17), et
la détermination de la séquence de la concentration en xénon dans la moitié haute du réacteur et la détermination de la séquence de la concentration en xénon dans la moitié basse du réacteur utilisant un modèle d'évolution d'une concentration en iode et d'une concentration en xénon en fonction d'un flux de neutrons.

**2.**   Procédé selon la revendication 1 dans lequel pour au moins une variable de la pluralité de variables, la détermination de la séquence temporelle de la variable comprend une mesure de la variable.

**3.**   Procédé selon l'une quelconque des revendications 1 à 2 dans lequel la pluralité de variables du réacteur comprend au moins l'une parmi

- une position d'un dispositif configuré pour absorber des neutrons dans le réacteur,
- une température moyenne mesurée de la cuve du réacteur,
- un débit d'un fluide caloporteur circulant dans le réacteur,
- une concentration en une espèce chimique dans le fluide caloporteur, l'espèce chimique étant configurée pour absorber des neutrons dans le réacteur, et
- un taux de combustion d'un combustible nucléaire contenu dans le réacteur.

4. Procédé selon la revendication 3 dans lequel la détermination de la séquence du déséquilibre axial de puissance prend également en compte au moins l'une parmi une température moyenne de référence de la cuve, un type de gestion du combustible correspondant à un fractionnement d'un cœur du réacteur lors d'un renouvellement du combustible, un enrichissement de noyaux fissiles du réacteur et un type de noyaux lourds du réacteur.

5. Procédé selon l'une quelconque des revendications 1 à 4 dans lequel la détermination de la séquence de la pluralité de variables du réacteur et la détermination de la séquence du déséquilibre axial de puissance prend en compte un scénario de commande du réacteur correspondant à une séquence de valeurs successives d'au moins une variable contrôlable par un opérateur.

6. Procédé selon la revendication 5 comprenant en outre une étape de détermination d'un score du scénario de commande, le score étant de préférence une valeur d'une grandeur choisie parmi un volume d'effluent produits, un écart moyen au déséquilibre axial de référence et une distance moyenne à des limites d'un domaine de fonctionnement du réacteur.

7. Procédé selon l'une quelconque des revendications 5 à 6, dans lequel le scénario de commande est un premier scénario de commande, les étapes du procédé étant réalisées une seconde fois en remplaçant le premier scénario par un deuxième scénario de commande du réacteur correspondant à une autre séquence de valeurs successives d'au moins une variable contrôlable, le procédé comprenant de préférence une étape de comparaison des scores du premier scénario et du deuxième scénario.

8. Programme d'ordinateur comprenant des instructions adaptées à la mise en œuvre du procédé selon l'une quelconque des revendications 1 à 7 lorsque ledit programme est exécuté sur un ordinateur.

9. Dispositif d'estimation d'une valeur future d'un déséquilibre axial de puissance dans un réacteur nucléaire, le dispositif comprenant un module de calcul configuré pour mettre en œuvre le procédé selon l'une des revendications 1 à 7, le module de calcul étant configuré pour

- obtenir une séquence de valeurs successives d'une consigne de puissance du réacteur,
- déterminer, pour chaque variable d'une pluralité de variables du réacteur, une séquence de valeurs successives de la variable, la séquence représentant des variations futures de la variable, les variations étant estimées en prenant en compte la consigne de puissance, la pluralité de variables du réacteur comprenant une concentration en xénon dans une moitié haute du réacteur, et une concentration en xénon dans une moitié basse du réacteur,
- déterminer une séquence de valeurs successives du déséquilibre axial de puissance en prenant en compte les séquence de la pluralité de variables du réacteur,

le module de calcul comprenant un module d'apprentissage automatique préalablement entraîné sur des données historiques de réacteurs, et

le module de calcul utilisant un modèle d'évolution d'une concentration en iode et d'une concentration en xénon en fonction d'un flux de neutrons, de sorte à déterminer la séquence de la concentration en xénon dans la moitié haute du réacteur et la séquence de la concentration en xénon dans la moitié basse du réacteur.

**Patentansprüche**

1. Computergestütztes Verfahren zur Schätzung eines zukünftigen Wertes eines axialen Leistungsungleichgewichts in einem Kernreaktor (11), wobei das Verfahren die folgenden Schritte umfasst:

- Erhalten einer Sequenz von aufeinanderfolgenden Werten eines Leistungssollwerts des Reaktors (12),
- Bestimmen, für jede Variable einer Vielzahl von Variablen des Reaktors, einer Sequenz von aufeinanderfolgenden Werten der Variablen (19), wobei die Sequenz zukünftige Variationen der Variablen darstellt, wobei die Variationen unter Berücksichtigung des Leistungssollwerts geschätzt werden, wobei die Vielzahl von Variablen des Reaktors eine Xenonkonzentration in einer oberen Hälfte des Reaktors und eine Xenonkonzentration in einer unteren Hälfte des Reaktors umfasst,

- Bestimmen einer Sequenz von aufeinanderfolgenden Werten des axialen Leistungsungleichgewichts (13) unter Berücksichtigung der Sequenzen der Vielzahl von Variablen des Reaktors (19),

wobei die Bestimmung der Sequenz des axialen Leistungsungleichgewichts (13) ein maschinelles Lernmodul (14) verwendet, das zuvor mit historischen Reaktordaten (17) trainiert wurde, und

wobei die Bestimmung der Sequenz der Xenonkonzentration in der oberen Hälfte des Reaktors und die Bestimmung der Sequenz der Xenonkonzentration in der unteren Hälfte des Reaktors ein Modell für die Entwicklung einer Jodkonzentration und einer Xenonkonzentration in Abhängigkeit von einem Neutronenstrom verwendet.

2. Verfahren nach Anspruch 1, wobei für mindestens eine Variable von der Vielzahl von Variablen die Bestimmung der zeitlichen Sequenz der Variablen eine Messung der Variablen umfasst.

3. Verfahren nach einem der Ansprüche 1 bis 2, wobei die Vielzahl von Variablen des Reaktors mindestens eine umfasst von

- einer Position einer Vorrichtung, die ausgelegt ist, um Neutronen im Reaktor zu absorbieren,
- einer gemessenen Durchschnittstemperatur des Reaktorbehälters,
- einer Durchflussmenge eines im Reaktor zirkulierenden Wärmeträgerfluids,
- einer Konzentration einer chemischen Spezies in dem Wärmeträgerfluid, wobei die chemische Spezies ausgelegt ist, um Neutronen im Reaktor zu absorbieren, und
- einer Abbrandrate eines im Reaktor enthaltenen Kernbrennstoffs.

4. Verfahren nach Anspruch 3, wobei die Bestimmung der Sequenz des axialen Leistungsungleichgewichts ebenfalls mindestens entweder eine mittlere Referenztemperatur des Behälters, eine Art des Brennstoffmanagements, die einer Fraktionierung eines Kerns des Reaktors bei einem Brennstoffwechsel entspricht, eine Anreicherung mit spaltbaren Kernen des Reaktors oder eine Art von schweren Kernen des Reaktors berücksichtigt.

5. Verfahren nach einem der Ansprüche 1 bis 4, wobei die Bestimmung der Sequenz der Vielzahl von Variablen des Reaktors und die Bestimmung der Sequenz des axialen Leistungsungleichgewichts ein Reaktorsteuerungsszenario berücksichtigt, das einer Sequenz von aufeinanderfolgenden Werten mindestens einer Variablen entspricht, die von einem Bediener steuerbar ist.

6. Verfahren nach Anspruch 5, das ferner einen Schritt des Bestimmens eines Scores des Steuerungsszenarios umfasst, wobei der Score vorzugsweise ein Wert einer Größe ist, die aus einem Volumen des erzeugten Abwassers, einer mittleren Abweichung vom axialen Referenzungleichgewicht und einem mittleren Abstand zu Grenzen eines Betriebsbereichs des Reaktors ausgewählt wird.

7. Verfahren nach einem der Ansprüche 5 bis 6, wobei das Steuerungsszenario ein erstes Steuerungsszenario ist, wobei die Verfahrensschritte ein zweites Mal durchgeführt werden, indem das erste Szenario durch ein zweites Szenario der Reaktorsteuerung ersetzt wird, das einer anderen Sequenz von aufeinanderfolgenden Werten mindestens einer steuerbaren Variablen entspricht, wobei das Verfahren vorzugsweise einen Schritt des Vergleichens des Scores des ersten Szenarios und des zweiten Szenarios umfasst.

8. Computerprogramm, das Anweisungen umfasst, die zur Durchführung des Verfahrens nach einem der Ansprüche 1 bis 7 geeignet sind, wenn das Programm auf einem Computer ausgeführt wird.

9. Vorrichtung zur Schätzung eines zukünftigen Wertes eines axialen Leistungsungleichgewichts in einem Kernreaktor, wobei die Vorrichtung ein Rechenmodul umfasst, das ausgelegt ist, um das Verfahren nach einem der Ansprüche 1 bis 7 auszuführen, wobei das Rechenmodul ausgelegt ist, um

- eine Sequenz von aufeinanderfolgenden Werten eines Leistungssollwerts des Reaktors zu erhalten,
- für jede Variable einer Vielzahl von Variablen des Reaktors eine Sequenz von aufeinanderfolgenden Werten der Variablen zu bestimmen, wobei die Sequenz zukünftige Variationen der Variablen darstellt, wobei die Variationen unter Berücksichtigung des Leistungssollwerts geschätzt werden, wobei die Vielzahl von Variablen des Reaktors eine Xenonkonzentration in einer oberen Hälfte des Reaktors und eine Xenonkonzentration in einer unteren Hälfte des Reaktors umfasst,
- eine Sequenz von aufeinanderfolgenden Werten des axialen Leistungsungleichgewichts unter Berücksichtigung der Sequenzen der Vielzahl von Variablen des Reaktors zu bestimmen,

wobei das Rechenmodul ein maschinelles Lernmodul umfasst, das zuvor mit historischen Reaktordaten trainiert wurde, und
wobei das Rechenmodul ein Modell der Entwicklung einer Jodkonzentration und einer Xenonkonzentration in Abhängigkeit von einem Neutronenstrom derart verwendet, dass die Sequenz der Xenonkonzentration in der oberen Hälfte des Reaktors und die Sequenz der Xenonkonzentration in der unteren Hälfte des Reaktors bestimmt wird.

## Claims

1. Computer-implemented method for estimating a future value of an axial power imbalance in a nuclear reactor (11), the method comprising the following steps:

   - obtaining a sequence of successive values of a reactor power setpoint (12),
   - for each variable of a plurality of variables of the reactor, determining a sequence of successive values of the variable (19), the sequence representing future variations of the variable, the variations being estimated by taking into account the power setpoint, the plurality of variables of the reactor comprising a concentration of xenon in an upper half of the reactor and a concentration of xenon in a lower half of the reactor,
   - determining a sequence of successive values of the axial power imbalance (13), by taking into account the sequences of the plurality of variables of the reactor (19),

     the determination of the sequence of the axial power imbalance (13) using a machine learning module (14) trained beforehand on historic reactor data (17), and
     the determination of the sequence of the concentration of xenon in the upper half of the reactor and the determination of the sequence of the concentration of xenon in the lower half of the reactor using a model of the evolution of a concentration of iodine and of a concentration of xenon as a function of a neutron flux.

2. The method according to claim 1, wherein for at least one variable of the plurality of variables, the determination of the time sequence of the variable comprises a measurement of the variable.

3. The method according to any one of claims 1 or 2, wherein the plurality of variables of the reactor comprises at least one of:

   - a position of a device configured to absorb neutrons in the reactor,
   - a measured average temperature of the reactor vessel,
   - a flow rate of a heat-transfer fluid circulating in the reactor,
   - a concentration of a chemical species in the heat-transfer fluid, the chemical species being configured to absorb neutrons in the reactor, and
   - a rate of combustion of a nuclear fuel contained in the reactor.

4. The method according to claim 3, wherein the determination of the sequence of the axial power imbalance also takes into account at least one of: a reference average temperature of the vessel, a type of fuel management corresponding to a splitting of a reactor core during a renewal of the fuel, an enrichment of fissile nuclei of the reactor and a type of heavy nuclei of the reactor.

5. The method according to any one of claims 1 to 4, wherein the determination of the sequence of the plurality of reactor variables and the determination of the sequence of the axial power imbalance takes into account a control scenario of the reactor corresponding to a sequence of successive values of at least one variable controllable by an operator.

6. The method according to claim 5, further comprising a step of determining a score of the control scenario, the score preferably being a value of a quantity chosen from: a volume of effluent produced, an average difference from the reference axial imbalance and an average distance to the limits of an operating range of the reactor.

7. The method according to any one of claims 5 to 6, wherein the control scenario is a first control scenario, the method steps being carried out a second time by replacing the first scenario by a second control scenario of the reactor corresponding to another sequence of successive values of at least one controllable variable, the method preferably comprising a step of comparing scores of the first scenario and second scenario.

8. A computer program comprising instructions suitable for implementing at least one of the steps of the method according to any one of the preceding claims 1 to 7 when said program is executed on a computer.

9. A device for estimating a future value of an axial power imbalance in a nuclear reactor, the device comprising a computing module configured to implement the method according to one of claims 1 to 7, the computing module being configured to:

- obtain a sequence of successive values of a reactor power setpoint,
- determine, for each variable of a plurality of variables of the reactor, a sequence of successive values of the variable, the sequence representing future variations of the variable, the variations being estimated by taking into account the power setpoint, the plurality of variables of the reactor comprising a concentration of xenon in an upper half of the reactor and a concentration of xenon in a lower half of the reactor,
- determine a sequence of successive values of the axial power imbalance by taking into account the sequence of the plurality of variables of the reactor,

the calculating module comprising a machine learning module trained beforehand on historic reactor data, and

the computing module using a model of evolution of a concentration of iodine and of a concentration of xenon as a function of a neutron flux, so as to determine the sequence of the concentration of xenon in the upper half of the reactor and the sequence of the concentration of xenon in the lower half of the reactor.

Figure 1

Figure 2

Figure 3

Figure 4

Figure 5

Figure 6

Figure 7

Figure 8

**EP 4 362 047 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9412984 A1